# EUROPEAN PATENT APPLICATION

(11) **EP 4 847 561 A1**
(43) Date of publication of application: **02.12.2026**
(21) Application number: 24920076.7
(22) Date of filing: 24.12.2024
(51) Int. Cl.: C08L 69/00, C08G 64/04, C08K 5/00, C08K 5/13, C08K 5/42, C08K 5/49, C08K 5/54, C08K 5/3467

(54) **AROMATIC POLYCARBONATE RESIN COMPOSITION AND MOLDED ARTICLE FORMED THEREFROM**

(30) Priority: 24.01.2024 JP 2024008458
(71) Applicant: TEIJIN LIMITED, Kita-ku, Osaka-shi, Osaka 530-0005 (JP)
(72) Inventor: ISOE, Shinsuke, Osaka-shi, Osaka 530-0005 (JP)
(74) Representative: Kraus & Lederer PartGmbB
(86) International application number: PCT/JP2024/045652
(87) International publication number: WO 2025/158853

(57) **Abstract**

A resin composition of the present invention contains (A) 100 parts by weight of an aromatic polycarbonate resin (component A) containing an aromatic polycarbonate resin having a branched structure having a branching ratio of 0.2 to 1.5 mol%; (B) 0.005 to 0.15 parts by weight of an organic alkali (alkaline earth) metal salt (component B); (C) 0.03 to 1.2 parts by weight of a colorant (component C) having an absorption maximum at a wavelength of less than 680 nm; (D) 0.01 to 0.5 parts by weight of a phenol-based thermal stabilizer (component D); and (E) 0.025 to 0.5 parts by weight of a phosphorus-based thermal stabilizer (component E), in which a total amount of the component D and the component E is 0.6 parts by weight or less, an average value of light transmittances at a wavelength of 400 to 700 nm in a thickness direction of a molded article having a thickness of 3 mm is 1.5% or less, and a light transmittance at a wavelength of 1,550 nm is 80% or more.

## Description

### Technical Field

The present invention relates to an aromatic polycarbonate resin composition that is excellent in moisture and heat resistance and flame retardancy and forms a molded article having a wavelength-selective absorption property and an excellent light stability of an absorption property, and a molded article formed from the aromatic polycarbonate resin composition.

### Background Art

In recent years, infrared sensors have been used in various fields. One of the fields is a field of autonomous driving technology, and corresponds to, for example, a monitoring system that monitors a passenger including a driver, or a LiDAR for detecting surrounding vehicles or buildings. For sensing of an infrared sensor, near-infrared radiation having a wavelength of about 800 to 1,600 nm is generally used. Since light in the visible light region to the near-infrared region becomes noise in performing sensing by an infrared radiation, a cover material that transmits light in a wavelength region used for sensing and blocks transmission of light in a wavelength region equal to or less than the wavelength region is necessary. Glass and resin are used as the cover material, and an acrylic resin and a polycarbonate resin, which are transparent materials, are generally used as the resin, and there is a great need for a polycarbonate resin having favorable transparency and excellent impact resistance and heat resistance. Further, in the future, a case where high flame retardancy corresponding to UL94 V-0 is required for a thin molded article is assumed.

Studies on a polycarbonate resin having wavelength-selective controllability have also been conducted in the past. The studies disclose a technique for blocking light in the visible light region to a part of the near infrared region by using a plurality of colorants having different absorption wavelength bands in combination (see Patent Literatures 1 to 6). However, Patent Literatures do not disclose a technique for imparting flame retardancy while maintaining infrared transmittance. On the other hand, Patent Literatures 7 to 10 disclose a technique for imparting flame retardancy corresponding to V-0 while maintaining transparency (favorable infrared transmittance) of a polycarbonate resin, but the technique is not applied to a wavelength-selective controlling polycarbonate resin, and a study on a composition technique for achieving both wavelength-selective controllability and flame retardancy has not been performed.

### Citation List

### Patent Literature

Patent Literature 1: JP2008-9222A
Patent Literature 2: JP2018-109734A
Patent Literature 3: JP2021-25029A
Patent Literature 4: JP2021-188010A
Patent Literature 5: WO2023/145197
Patent Literature 6: JP2022-125331A
Patent Literature 7: JP2007-31583A
Patent Literature 8: JP2011-84670A
Patent Literature 9: JP2011-84692A
Patent Literature 10: JP2012-97223A

### Summary of Invention

### Technical Problem

An object of the present invention is to provide an aromatic polycarbonate resin composition that is excellent in moisture and heat resistance and flame retardancy and forms a molded article having a wavelength-selective absorption property and an excellent light stability of an absorption property, and a molded article formed from the aromatic polycarbonate resin composition.

### Solution to Problem

As a result of intensive studies, the present inventor has found that the above-mentioned problems can be solved by an aromatic polycarbonate resin composition containing a specific polycarbonate resin, a flame retardant, a colorant, and a thermal stabilizer. That is, the present inventor has found that the above-mentioned object is achieved by the following resin composition.

1. A resin composition containing
   (A) 100 parts by weight of an aromatic polycarbonate resin (component A) containing an aromatic polycarbonate resin having a branched structure having a branching ratio of 0.2 to 1.5 mol%;
   (B) 0.005 to 0.15 parts by weight of an organic alkali (alkaline earth) metal salt (component B);
   (C) 0.03 to 1.2 parts by weight of a colorant (component C) having an absorption maximum at a wavelength of less than 680 nm;
   (D) 0.01 to 0.5 parts by weight of a phenol-based thermal stabilizer (component D); and
   (E) 0.025 to 0.5 parts by weight of a phosphorus-based thermal stabilizer (component E),

   in which a total amount of the component D and the component E is 0.6 parts by weight or less,
   an average value of light transmittances at a wavelength of 400 to 700 nm in a thickness direction of a molded article having a thickness of 3 mm is 1.5% or less, and
   the light transmittance at a wavelength of 1,550 nm is 80% or more.
2. The resin composition according to the item 1, in which a content of the aromatic polycarbonate resin having a branched structure having a branching ratio of 0.2 to 1.5 mol% in the component A is 50 to 100 wt%.
3. The resin composition according to the item 1 or 2, containing (F) 0.001 to 1.2 parts by weight of a colorant (component F) having an absorption maximum at a wavelength of 680 nm or more and less than 1,000 nm with respect to 100 parts by weight of the component A, in which a total amount of the component C and the component F is 1.3 parts by weight or less.
4. The resin composition according to the item 3, in which an average value of light transmittances at a wavelength of 700 nm to a wavelength at which absorption of the component F is maximum in a thickness direction of a molded article having a thickness of 3 mm is 1.5% or less.
5. The resin composition according to the item 3 or 4, in which the component F is at least one colorant selected from the group consisting of an anthraquinone-based colorant, a phthalocyanine-based colorant, a perylene-based colorant, and a heterocyclic colorant.
6. The resin composition according to any one of the items 1 to 5, containing (G) a silicone compound having a Si-H group in a molecule (Component G) in an amount of 0.1 to 6 parts by weight with respect to 100 parts by weight of the component A.
7. The resin composition according to any one of the items 1 to 6, containing (H) a benzotriazole-based ultraviolet absorber and/or a triazine-based ultraviolet absorber (Component H) in an amount of 0.01 to 1 parts by weight with respect to 100 parts by weight of the component A.
8. A molded article formed from the resin composition according to any one of the items 1 to 7.
9. The molded article according to the item 8, in which the molded article is a cover material covering an infrared sensor.
10. The molded article according to the item 9, in which the molded article is a cover material covering an infrared sensor used for a monitoring system for monitoring a passenger including a driver and an LiDAR for detecting a surrounding vehicle and a building.

### Advantageous Effects of Invention

A resin composition of the present invention is excellent in moisture and heat resistance and flame retardancy, forms a molded article having a wavelength-selective absorption property, and is excellent in light stability of an absorption property, and therefore can be adapted to a member for an infrared sensor requiring flame retardancy, and can be stably used even under conditions in which light is exposed for a long period of time. Examples of applications thereof include a cover material covering an infrared sensor used for a monitoring system for monitoring a passenger including a driver, or a LiDAR for detecting a surrounding vehicle and a building, and the resin composition can contribute to a future safe autonomous driving system.

### Description of Embodiments

### (Component A: Aromatic Polycarbonate Resin containing Aromatic Polycarbonate Resin having Branched Structure having Branch Ratio of 0.2 to 1.5 mol%)

An aromatic polycarbonate resin used as a component A needs to contain an aromatic polycarbonate resin having a branched structure having a branching ratio of 0.2 to 1.5 mol%. From the viewpoint of imparting more excellent flame retardancy, the component A preferably contains 50 to 100 wt%, more preferably 80 to 100 wt%, still more preferably 90 to 100 wt%, and most preferably 100 wt% of the aromatic polycarbonate resin. When the content is less than 50 wt%, flame retardancy may be deteriorated.

The branching ratio of the aromatic polycarbonate resin having a branched structure is required to be 0.2 to 1.5 mol%, and is preferably 0.4 to 1.1 mol%, and more preferably 0.7 to 1.1 mol%. The branching ratio means the number of moles of a structural unit derived from a branching agent with respect to the total number of moles of the structural unit derived from a dihydric phenol used in the production included in the entire resin [(the number of moles of a structural unit derived from a branching agent/the total number of moles of a structural unit derived from a dihydric phenol) × 100 mol%], and the branching ratio can be measured by ¹H-NMR measurement. When the branching ratio is less than 0.2 mol%, dropping prevention is not exhibited, and the flame retardancy of the resin composition is reduced. On the other hand, when the branching ratio is more than 1.5 mol%, a polymer is crosslinked to generate a gel, thereby reducing the light transmittance of infrared radiation.

The total nitrogen (N) amount in the aromatic polycarbonate resin having a branched structure is preferably 0 to 20 ppm, and more preferably 0 to 10 ppm. In addition, the total chlorine (Cl) amount is preferably 0 to 200 ppm, and more preferably 0 to 150 ppm. When the total N amount in the resin is more than 20 ppm or the total Cl amount is more than 200 ppm, thermal stability may be deteriorated.

The polycarbonate resin having a branched structure is obtained by a reaction of a dihydric phenol, a branching agent, a monohydric phenol, and phosgene.

Representative examples of the dihydric phenol to be used include 2,2-bis(4-hydroxyphenyl)propane (commonly called bisphenol A), hydroquinone, resorcinol, 4,4'-biphenol, 1,1-bis(4-hydroxyphenyl)ethane, 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl) oxide, bis(4-hydroxyphenyl) sulfide, and bis(4-hydroxyphenyl) sulfoxide. The dihydric phenols may be used alone or in combination of two or more kinds thereof. Among these, 2,2-bis(4-hydroxyphenyl)propane, that is, bisphenol A is preferred.

Representative examples of the branching agent (trihydric or higher phenol) used in the present invention include 1,1,1-tris(4-hydroxyphenyl)ethane, 4,6-dimethyl-2,4,6-tri(4-hydroxyphenyl)heptene-2, 4,6-dimethyl-2,4,6-tri(4-hydroxyphenyl)heptane, 1,3,5-tri(4-hydroxyphenyl)benzene, 2,6-bis(2-hydroxy-5-methylbenzyl)-4-methylphenol, tetra(4-hydroxyphenyl)methane, trisphenol, bis(2,4-dihydroxylphenyl) ketone, phloroglucin, phloroglucide, isatin bisphenol, 1,4-bis(4,4-dihydroxytriphenylmethyl)benzene, trimellitic acid, and pyromellitic acid. The branching agents may be used alone or in combination of two or more kinds thereof. Among these, 1,1,1-tris(4-hydroxyphenyl)ethane is preferred.

The monohydric phenol (terminal stopper) may have any structure and is not particularly limited. Examples thereof include p-tert-butylphenol, p-tert-octylphenol, p-cumylphenol, 4-hydroxybenzophenone, and phenol. The monohydric phenols may be used alone or in combination of two or more kinds thereof. Among these, p-tert-butylphenol is preferred. That is, the polycarbonate resin having a branched structure preferably has a structure in which a branched structure moiety is a structure derived from 1,1,1-tris(4-hydroxyphenyl)ethane, a linear structure moiety excluding the branched structure moiety is a structure derived from bisphenol A, and a terminal is a structure derived from p-tert-butylphenol.

The polycarbonate resin having a branched structure of the present invention is suitably produced by the following first or second production method.

The first production method is a method in which a dihydric phenol and phosgene are reacted in the presence of a solvent to obtain a polycarbonate oligomer, a monohydric phenol is reacted with the polycarbonate oligomer, and the obtained polycarbonate oligomer is then reacted with a branching agent, then emulsified, and polymerized under a non-stirring condition. The reaction temperature from phosgenation to before emulsification is preferably 10 to 40°C, and more preferably 15 to 30°C. The reaction temperature after emulsification is preferably 20 to 50°C, and more preferably 30 to 40°C. The polymerization time is preferably 1 to 6 hours, and more preferably 2 to 4 hours. The obtained reaction mixture is subjected to treatment through ordinary means such as washing and separation to obtain a desired polycarbonate resin having a branched structure of the present invention.

The second production method is a method in which a dihydric phenol, a branching agent, and phosgene are reacted with one another in the presence of a solvent to obtain a polycarbonate oligomer, a monohydric phenol is reacted with the polycarbonate oligomer, and the obtained polycarbonate oligomer is emulsified, a dihydric phenol is added in an amount of preferably 1/30 to 1/200, and more preferably 1/40 to 1/100, of the first reaction amount of the dihydric phenol, and polymerization is performed under a non-stirring condition.

The reaction temperature from phosgenation to before emulsification is preferably 10 to 40°C, and more preferably 15 to 30°C. The reaction temperature after emulsification is preferably 20 to 50°C, and more preferably 30 to 40°C. When the polymerization reaction is continuously performed, a highly viscous emulsified fluid in each of polymerization tanks needs only to be mixed at a stirring rate in each of the polymerization tanks of preferably 100 rpm or less, and more preferably 50 rpm or less through plug flow so that residence times are substantially the same in a perpendicular direction of a fluid advance direction. The polymerization time is preferably 1 to 6 hours, and more preferably 2 to 4 hours. The obtained reaction mixture is subjected to treatment through ordinary means such as washing and separation to obtain a desired polycarbonate resin having a branched structure of the present invention.

As the reaction catalyst, a tertiary amine such as triethylamine, tetra-n-butylammonium bromide, or tetra-n-butylphosphonium bromide may be used. However, this catalyst is reacted with a chloroformate group to form a thermally unstable urethane bond or this catalyst remains, and thereby the total N amount contained in the polycarbonate resin having a branched structure is increased. Accordingly, the usage amount of the tertiary amine with respect to the used dihydric phenol is preferably 0.2 mol% or less, more preferably 0.1 mol% or less, and still more preferably 0.05 mol% or less. In particular, the above-mentioned reaction is preferably carried out without a catalyst.

Furthermore, in order to reduce the total Cl amount contained in the polycarbonate resin having a branched structure, a chlorinated hydrocarbon solvent used as a solvent in the reaction, such as dichloromethane (methylene chloride), dichloroethane, trichloroethane, tetrachloroethane, pentachloroethane, hexachloroethane, dichloroethylene, chlorobenzene, and dichlorobenzene, needs to be removed. For example, powder and pellets of the polycarbonate resin having a branched structure may be sufficiently dried.

In addition, one or two or more kinds of aromatic polycarbonate resins having a branched structure may be mixed.

The aromatic polycarbonate resin having a branched structure preferably has substantially no halogen atoms. The phrase "has substantially no halogen atoms" means that a halogen-substituted dihydric phenol or the like is not contained in the molecule, and a trace amount of solvent (halogenated hydrocarbon) or carbonate precursor remaining in the above-mentioned production method is not targeted.

The viscosity-average molecular weight of the aromatic polycarbonate resin containing the aromatic polycarbonate resin having a branched structure of the present invention is preferably in the range of 16,000 to 32,000, more preferably in the range of 17,000 to 30,000, and still more preferably in the range of 19,000 to 26,000. When the viscosity-average molecular weight is more than 32,000, the melt tension may be high, and the moldability may be low. When it is less than 16,000, drip prevention during combustion of a molded piece is less liable to be developed, and the flame retardancy of the resin composition may be reduced.

The viscosity-average molecular weight (M) as used in the present invention is determined as follows. A specific viscosity (ηSP) calculated by the following equation:$specific viscosity : \left(ηSP\right) = \left(t-{t}_{0}\right) / {t}_{0}$
in which t₀ represents the falling time in seconds of methylene chloride, and t represents the falling time in seconds of the sample solution,
is determined using an Ostwald viscometer from a solution in which 0.7 g of the aromatic polycarbonate resin is dissolved at 20°C in 100 mL of methylene chloride,
   and the viscosity-average molecular weight M is calculated from the determined specific viscosity (ηSP) by the following equation: $ηSP / c = \left[η\right] + 0.45 \times {\left[η\right]}^{2} c$
in which [η] represents an intrinsic viscosity. $\left[η\right] = 1.23 \times {10}^{- 4} {M}^{0.83}$ $c = 0.7$

The component A may contain a linear aromatic polycarbonate resin. The linear aromatic polycarbonate resin is usually obtained by reacting a dihydric phenol with a carbonate precursor through an interfacial polycondensation method or a melt transesterification method, by polymerizing a carbonate prepolymer through a solid-phase transesterification method, or by polymerizing a cyclic carbonate compound through a ring-opening polymerization method.

Representative examples of the dihydric phenol used herein include hydroquinone, resorcinol, 4,4'-dihydroxydiphenyl, bis(4-hydroxyphenyl)methane, bis[(4-hydroxy-3,5-dimethyl)phenyl]methane, 1,1-bis(4-hydroxyphenyl)ethane, 1,1-bis(4-hydroxyphenyl)-1-phenylethane, 2,2-bis(4-hydroxyphenyl)propane (commonly called bisphenol A), 2,2-bis[(4-hydroxy-3-methyl)phenyl]propane, 2,2-bis[(4-hydroxy-3,5-dimethyl)phenyl]propane, 2,2-bis[(3-isopropyl-4-hydroxy)phenyl]propane, 2,2-bis[(4-hydroxy-3-phenyl)phenyl]propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)-4-isopropylcyclohexane, 1,1-bis(4-hydroxyphenyl)-3,3,5-trimethylcyclohexane, 9,9-bis(4-hydroxyphenyl)fluorene, 9,9-bis[(4-hydroxy-3-methyl)phenyl]fluorene, α,α'-bis(4-hydroxyphenyl)-o-diisopropylbenzene, α,α'-bis(4-hydroxyphenyl)-m-diisopropylbenzene, α,α'-bis(4-hydroxyphenyl)-p-diisopropylbenzene, 1,3-bis(4-hydroxyphenyl)-5,7-dimethyladamantane, 4,4'-dihydroxydiphenylsulfone, 4,4'-dihydroxydiphenylsulfoxide, 4,4'-dihydroxydiphenylsulfide, 4,4'-dihydroxydiphenyl ketone, 4,4'-dihydroxydiphenyl ether, and 4,4'-dihydroxydiphenyl ester. The dihydric phenols may be used alone or in a mixture of two or more kinds thereof.

Among these, a homopolymer or copolymer obtained from at least one bisphenol selected from the group consisting of bisphenol A, 2,2-bis[(4-hydroxy-3-methyl)phenyl]propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, and α,α'-bis(4-hydroxyphenyl)-m-diisopropylbenzene is preferably used, and a homopolymer of bisphenol A and a copolymer of 1,1-bis(4-hydroxyphenyl)-3,3,5-trimethylcyclohexane with bisphenol A, 2,2-bis[(4-hydroxy-3-methyl)phenyl]propane, or α,α'-bis(4-hydroxyphenyl)-m-diisopropylbenzene is particularly preferably used. Among these, 2,2-bis(4-hydroxyphenyl)propane, that is, bisphenol A is further preferred.

As the carbonate precursor, carbonyl halide, carbonate ester, haloformate, or the like is used, and specific examples thereof include phosgene, diphenyl carbonate, and dihaloformate of dihydric phenol. Among these, phosgene or diphenyl carbonate is industrially advantageous.

When the linear aromatic polycarbonate resin is produced by reacting the dihydric phenol with the carbonate precursor through an interfacial polycondensation method or a melt transesterification method, a catalyst, a terminal stopper, an antioxidant of a dihydric phenol, or the like may be used as needed. In addition, a mixture of two or more kinds of the obtained linear aromatic polycarbonate resins may be used.

A reaction through an interfacial polycondensation method is usually a reaction of a dihydric phenol with phosgene in the presence of an acid binder and an organic solvent. As the acid binder, for example, an alkali metal hydroxide such as sodium hydroxide or potassium hydroxide or an amine compound such as pyridine is used. As the organic solvent, for example, a halogenated hydrocarbon such as methylene chloride or chlorobenzene is used. In addition, for example, a catalyst such as a tertiary amine such as triethylamine, tetra-n-butylammonium bromide, or tetra-n-butylphosphonium bromide, a quaternary ammonium compound, or a quaternary phosphonium compound may be used to promote the reaction. At this time, the reaction temperature is usually 0 to 40°C, the reaction time is preferably about 10 minutes to about 5 hours, and the pH during the reaction is preferably maintained at 9 or more. In addition, in the polymerization reaction, a terminal stopper (monohydric phenol) is usually used. A monofunctional phenol may be used as the terminal stopper. The monofunctional phenol is generally used as the terminal stopper for molecular weight adjustment, and the monofunctional phenol is generally phenol or a lower alkylsubstituted phenol, and may show a monofunctional phenol represented by the following general formula (1).

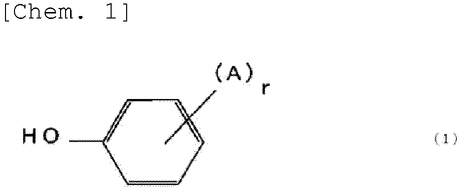

In the formula, A represents a hydrogen atom, a linear or branched alkyl group having 1 to 9 carbon atoms, or a phenyl group-substituted alkyl group; and r represents an integer of 1 to 5, and preferably 1 to 3.

Specific examples of the monofunctional phenol include phenol, p-tert-butylphenol, p-cumylphenol, and isooctylphenol.

In addition, other examples of the monofunctional phenol include a phenol having a long-chain alkyl group or an aliphatic polyester group as a substituent, a benzoic acid chloride, and a long-chain alkylcarboxylic acid chloride. Among these, phenols each having as a substituent a long-chain alkyl group that are represented by the following general formulae (2) and (3) are preferably used.

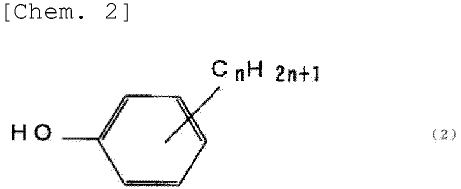

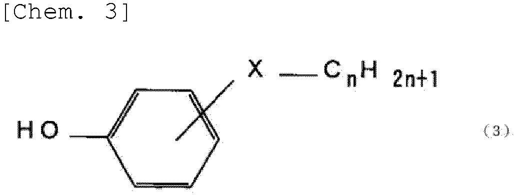

In the formulae, X represents -R-O-,-R-CO-O-, or -R-O-CO- in which R represents a single bond or a divalent aliphatic hydrocarbon group having 1 to 10 carbon atoms, and preferably 1 to 5 carbon atoms, and n represents an integer of 10 to 50.

The substituted phenol of the general formula (2) is preferably one in which n is 10 to 30, and particularly preferably 10 to 26, and specific examples thereof include decyl phenol, dodecyl phenol, tetradecyl phenol, hexadecyl phenol, octadecyl phenol, eicosyl phenol, docosyl phenol, and triacontyl phenol.

In addition, the substituted phenol of the general formula (3) is suitably a compound in which X is -R-CO-O- and R is a single bond, and n is 10 to 30, and particularly suitably 10 to 26, and specific examples thereof include decyl hydroxybenzoate, dodecyl hydroxybenzoate, tetradecyl hydroxybenzoate, hexadecyl hydroxybenzoate, eicosyl hydroxybenzoate, docosyl hydroxybenzoate, and triacontyl hydroxybenzoate. The terminal stoppers may be used alone or as a mixture of two or more kinds thereof.

The reaction through the melt transesterification method is usually a transesterification reaction between a dihydric phenol and a carbonate ester, and is carried out by a method in which a dihydric phenol and a carbonate ester are mixed in the presence of an inert gas under heating, and an alcohol or a phenol to be produced is distilled. The reaction temperature varies depending on the boiling point of the alcohol or the phenol to be produced, or the like, but is usually in the range of 120 to 350°C. In the latter stage of the reaction, distillation of the alcohol or the phenol produced is facilitated by reducing the pressure of the system to about 1.33×10³ to 13.3 Pa. The reaction time is usually about 1 to 4 hours.

Examples of the carbonate ester include an optionally substituted ester having an aryl group having 6 to 10 carbon atoms, an aralkyl group, or an alkyl group having 1 to 4 carbon atoms. Specific examples thereof include diphenyl carbonate, bis(chlorophenyl) carbonate, dinaphthyl carbonate, bis(diphenyl) carbonate, dimethyl carbonate, diethyl carbonate, and dibutyl carbonate, and among these, diphenyl carbonate is preferred.

In addition, a polymerization catalyst may be used for accelerating the polymerization rate, and as the polymerization catalyst, for example, a catalyst usually used in an esterification reaction or a transesterification reaction, such as an alkali metal compound such as sodium hydroxide, potassium hydroxide, or a sodium or potassium salt of a dihydric phenol, an alkaline earth metal compound such as calcium hydroxide, barium hydroxide, or magnesium hydroxide, a nitrogen-containing basic compound such as tetramethylammonium hydroxide, tetraethylammonium hydroxide, trimethylamine, or triethylamine, an alkoxide of alkali metal or alkaline earth metal, an organic acid salt of alkali metal or alkaline earth metal, a zinc compound, a boron compound, an aluminum compound, a silicon compound, a germanium compound, an organotin compound, a lead compound, an osmium compound, an antimony compound, a manganese compound, a titanium compound, or a zirconium compound, may be used. The catalysts may be used alone or in combination of two or more kinds thereof. The usage amount of the polymerization catalyst is selected in a range of preferably 1 × 10⁻⁸ to 1 × 10⁻³ equivalent, and more preferably 1 × 10⁻⁷ to 5 × 10⁻⁴ equivalent with respect to 1 mol of the dihydric phenol as a raw material.

In addition, to reduce the phenolic terminal group in the polymerization reaction, a compound such as bis(chlorophenyl) carbonate, bis(bromophenyl) carbonate, bis(nitrophenyl) carbonate, bis(phenylphenyl) carbonate, chlorophenylphenyl carbonate, bromophenylphenyl carbonate, nitrophenylphenyl carbonate, phenylphenyl carbonate, methoxycarbonylphenylphenyl carbonate, or ethoxycarbonylphenylphenyl carbonate may be added during the latter stage of or after completion of the polycondensation reaction. Among these, 2-chlorophenylphenyl carbonate, 2-methoxycarbonylphenylphenyl carbonate, or 2-ethoxycarbonylphenylphenyl carbonate is preferably used, and 2-methoxycarbonylphenylphenyl carbonate is particularly preferably used.

Furthermore, a deactivator that neutralizes the activity of the catalyst in the polymerization reaction is preferably used. Specific examples of the deactivator include, but are not particularly limited to, sulfonic acid esters such as benzenesulfonic acid, p-toluenesulfonic acid, methyl benzenesulfonate, ethyl benzenesulfonate, butyl benzenesulfonate, octyl benzenesulfonate, phenyl benzenesulfonate, methyl p-toluenesulfonate, ethyl p-toluenesulfonate, butyl p-toluenesulfonate, octyl p-toluenesulfonate, and phenyl p-toluenesulfonate; and compounds such as trifluoromethanesulfonic acid, naphthalenesulfonic acid, sulfonated polystyrene, a methyl acrylate-sulfonated styrene copolymer, 2-phenyl-2-propyl dodecylbenzenesulfonate, 2-phenyl-2-butyl dodecylbenzenesulfonate, tetrabutylphosphonium octylsulfonate, tetrabutylphosphonium decylsulfonate, tetrabutylphosphonium benzenesulfonate, tetraethylphosphonium dodecylbenzenesulfonate, tetrabutylphosphonium dodecylbenzenesulfonate, tetrahexylphosphonium dodecylbenzenesulfonate, tetraoctylphosphonium dodecylbenzenesulfonate, decylammonium butyl sulfate, decylammonium decyl sulfate, dodecylammonium butyl sulfate, dodecylammonium ethyl sulfate, dodecylmethylammonium methyl sulfate, dodecyldimethylammonium tetradecyl sulfate, tetradodecyldimethylammonium methyl sulfate, tetramethylammonium hexyl sulfate, decyltrimethylammonium hexadecyl sulfate, tetrabutylammonium dodecylbenzyl sulfate, tetraethylammonium dodecylbenzyl sulfate, and tetramethylammonium dodecylbenzyl sulfate. Two or more kinds of these compounds may be used in combination.

Among the deactivators, deactivators having a phosphonium salt form or an ammonium salt form are preferred. The deactivator is preferably used in an amount of 0.5 to 50 mol with respect to 1 mol of the remaining catalyst, and is used at a proportion of 0.01 to 500 ppm, more preferably 0.01 to 300 ppm, and particularly preferably 0.01 to 100 ppm with respect to the linear aromatic polycarbonate resin after polymerization.

The molecular weight of the linear polycarbonate resin is not specified, but when the viscosity-average molecular weight is less than 10,000, high-temperature properties are deteriorated, and when the viscosity-average molecular weight is more than 50,000, molding processability is deteriorated. Therefore, the viscosity-average molecular weight is preferably 10,000 to 50,000, more preferably 14,000 to 30,000, still more preferably 18,000 to 26,000, and most preferably 19,000 to 23,000. In addition, two or more kinds of the obtained linear aromatic polycarbonate resins may be mixed. In this case, when the viscosity-average molecular weight of a mixture of two or more kinds of the linear aromatic polycarbonate resins is in a preferable range, a linear aromatic polycarbonate resin having a viscosity-average molecular weight outside of the above-mentioned range may be reasonably mixed.

In particular, a mixture with a linear aromatic polycarbonate resin having a viscosity-average molecular weight of more than 50,000 is preferred because it has a high dripping prevention ability and further efficiently exhibits the effects of the present invention. A mixture with a linear aromatic polycarbonate resin having a viscosity-average molecular weight of 80,000 or more is more preferred, and a mixture with a linear aromatic polycarbonate resin having a viscosity-average molecular weight of 100,000 or more is still more preferred. That is, a linear aromatic polycarbonate resin having two distribution peaks clearly determined by a method such as gel permeation chromatography (GPC) may be preferably used.

A method for calculating the viscosity-average molecular weight is the same as that for the aromatic polycarbonate resin containing an aromatic polycarbonate resin having a branched structure.

The linear aromatic polycarbonate resin preferably contains substantially no halogen atom. The phrase "contains substantially no halogen atom" means that a halogen-substituted dihydric phenol or the like is not contained in the molecule, and a trace amount of a chlorine-based solvent or carbonate precursor remaining in the above-mentioned method for producing a linear aromatic polycarbonate resin is not targeted.

### (Component B: Organic Alkali (Alkaline Earth) Metal Salt)

The resin composition of the present invention contains an organic alkali (alkaline earth) metal salt. As the organic alkali (alkaline earth) metal salt, various metal salts conventionally used for flame retardation of a polycarbonate resin may be used, and particularly, examples thereof include an alkali (alkaline earth) metal salt of an organic sulfonic acid, an alkali (alkaline earth) metal salt of an aromatic imide, an alkali (alkaline earth) metal salt of a sulfuric acid ester, and an alkali (alkaline earth) metal salt of a phosphoric acid partial ester. (Here, the phrase "alkali (alkaline earth) metal salt" is used to mean both an alkali metal salt and an alkaline earth metal salt.) The organic alkali (alkaline earth) metal salts may be used alone or in combination of two or more kinds thereof. A metal constituting the organic alkali (alkaline earth) metal salt is an alkali metal or an alkaline earth metal, and more suitably an alkali metal. Examples of the alkali metal include lithium, sodium, potassium, rubidium, and cesium, examples of the alkaline earth metal include beryllium, magnesium, calcium, strontium, and barium, and lithium, sodium, and potassium are particularly preferred.

Examples of the alkali (alkaline earth) metal salt of the organic sulfonic acid include an alkali (alkaline earth) metal salt of an aliphatic sulfonic acid and an alkali (alkaline earth) metal salt of an aromatic sulfonic acid. Preferable examples of the alkali (alkaline earth) metal salt of an aliphatic sulfonic acid include an alkyl sulfonic acid alkali (alkaline earth) metal salt, a sulfonic acid alkali (alkaline earth) metal salt in which the alkyl group of the alkyl sulfonic acid alkali (alkaline earth) metal salt is partially substituted with a fluorine atom, and a perfluoroalkyl sulfonic acid alkali (alkaline earth) metal salt, and one or two or more kinds of these alkali (alkaline earth) metal salts may be used in combination.

Preferable examples of the alkyl sulfonic acid alkali (alkaline earth) metal salt include a methanesulfonic acid salt, an ethanesulfonic acid salt, a propanesulfonic acid salt, a butanesulfonic acid salt, a methylbutanesulfonic acid salt, a hexanesulfonic acid salt, a heptanesulfonic acid salt, and an octanesulfonic acid salt, and one or two or more kinds of the alkyl sulfonic acid alkali (alkaline earth) metal salts may be used in combination. In addition, examples thereof include a metal salt in which the alkyl group is partially substituted with a fluorine atom.

On the other hand, preferable examples of the perfluoroalkylsulfonic acid alkali (alkaline earth) metal salt include a perfluoromethanesulfonic acid salt, a perfluoroethanesulfonic acid salt, a perfluoropropanesulfonic acid salt, a perfluorobutanesulfonic acid salt, a perfluoromethylbutanesulfonic acid salt, a perfluorohexanesulfonic acid salt, a perfluoroheptanesulfonic acid salt, and a perfluorooctanesulfonic acid salt, and those having 1 to 8 carbon atoms are particularly preferred. One or two or more kinds of the perfluoroalkylsulfonic acid alkali (alkaline earth) metal salts may be used in combination.

Among these, a perfluoroalkylsulfonic acid alkali metal salt is most preferred. Among these alkali metals, when the flame retardancy is highly required, rubidium and cesium are suitable, while rubidium and cesium are not general and difficult to purify, and therefore may be disadvantageous in terms of cost. On the other hand, lithium and sodium are advantageous in terms of cost, but may be disadvantageous in terms of flame retardancy. In view of the foregoing, alkali metals among the perfluoroalkylsulfonic acid alkali metal salts may be selectively used, but potassium perfluoroalkylsulfonate, which is excellent in balance of characteristics, is most suitable in all the points. The potassium salt and a perfluoroalkylsulfonic acid alkali metal salt including an alkali metal other than potassium may be used in combination.

Specific examples of the perfluoroalkylsulfonic acid alkali metal salt include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, and rubidium perfluorohexanesulfonate. One or two or more kinds of the perfluoroalkylsulfonic acid alkali metal salts may be used in combination. Among these, potassium perfluorobutanesulfonate is particularly preferred.

Examples of the aromatic sulfonic acid used for the aromatic sulfonic acid alkali (alkaline earth) metal salt include at least one acid selected from the group consisting of a sulfonic acid of a monomeric or polymeric aromatic sulfide, a sulfonic acid of an aromatic carboxylic acid or an aromatic carboxylic acid ester, a sulfonic acid of a monomeric or polymeric aromatic ether, a sulfonic acid of an aromatic sulfonate, a monomeric or polymeric aromatic sulfonic acid, a monomeric or polymeric aromatic sulfone-sulfonic acid, a sulfonic acid of an aromatic ketone, a heterocyclic sulfonic acid, a sulfonic acid of an aromatic sulfoxide, and a condensate of an aromatic sulfonic acid via a methylene bond. One or two or more kinds of the aromatic sulfonic acids may be used in combination.

A sulfonic acid alkali (alkaline earth) metal salt of a monomeric or polymeric aromatic sulfide is described in JPS50-98539A, and examples thereof include disodium diphenyl sulfide-4,4'-disulfonate and dipotassium phenyl sulfide-4,4'-disulfonate.

An alkali (alkaline earth) metal salt of an aromatic carboxylic acid or an aromatic carboxylic acid ester is described in JPS50-98540A, and examples thereof include potassium 5-sulfoisophthalate, sodium 5-sulfoisophthalate, and polysodium polyethyleneterephthalate polysulfonate.

A sulfonic acid alkali (alkaline earth) metal salt of a monomeric or polymeric aromatic ether is described in JPS50-98542A, and examples thereof include calcium 1-methoxynaphthalene-4-sulfonate, disodium 4-dodecylphenyl ether disulfonate, polysodium poly(2,6-dimethylphenylene oxide) polysulfonate, polysodium poly(1,3-phenylene oxide) polysulfonate, polysodium poly(1,4-phenylene oxide) polysulfonate, polypotassium poly(2,6-diphenylphenylene oxide) polysulfonate, and lithium poly(2-fluoro-6-butylphenylene oxide) polysulfonate.

An alkali (alkaline earth) metal salt of an aromatic sulfonate is described in JPS50-98544A, and examples thereof include potassium sulfonate of benzenesulfonate.

A monomeric or polymeric aromatic sulfonic acid alkali (alkaline earth) metal salt is described in JPS50-98546A, and examples thereof include sodium benzenesulfonate, strontium benzenesulfonate, magnesium benzenesulfonate, dipotassium p-benzenedisulfonate, dipotassium naphthalene-2,6-disulfonate, and calcium biphenyl-3,3'-disulfonate.

A monomeric or polymeric aromatic sulfone-sulfonic acid alkali (alkaline earth) metal salt is described in JPS52-54746A, and examples thereof include sodium diphenylsulfone-3-sulfonate, potassium diphenylsulfone-3-sulfonate, dipotassium diphenylsulfone-3,3'-disulfonate, and dipotassium diphenylsulfone-3,4'-disulfonate.

A sulfonic acid alkali (alkaline earth) metal salt of an aromatic ketone is described in JPS50-98547A, and examples thereof include sodium α,α,α-trifluoroacetophenone-4-sulfonate, and dipotassium benzophenone-3,3'-disulfonate.

A heterocyclic sulfonic acid alkali (alkaline earth) metal salt is described in JPS50-116542A, and examples thereof include disodium thiophene-2,5-disulfonate, dipotassium thiophene-2,5-disulfonate, calcium thiophene-2,5-disulfonate, and sodium benzothiophenesulfonate.

A sulfonic acid alkali (alkaline earth) metal salt of an aromatic sulfoxide is described in JPS52-4745A, and examples thereof include potassium diphenylsulfoxide-4-sulfonate.

Examples of the condensate of an aromatic sulfonic acid alkali (alkaline earth) metal salt via a methylene bond include a formalin condensate of sodium naphthalenesulfonate and a formalin condensate of sodium anthracenesulfonate.

Examples of the alkali (alkaline earth) metal salt of a sulfuric acid ester include especially alkali (alkaline earth) metal salts of sulfuric acid esters of monohydric and/or polyhydric alcohols, and examples of the sulfuric acid esters of monohydric and/or polyhydric alcohols include methyl sulfate, ethyl sulfate, lauryl sulfate, hexadecyl sulfate, polyoxyethylene alkyl phenyl ether sulfate, pentaerythritol mono, di, tri, and tetrasulfates, glycerol monolaurate sulfate, glycerol monopalmitate sulfate, and glycerol monostearate sulfate. The alkali (alkaline earth) metal salt of a sulfuric acid ester is preferably an alkali (alkaline earth) metal salt of a laurylsulfuric acid ester.

Specific examples of the alkali (alkaline earth) metal salt of the phosphoric acid partial ester include alkali (alkaline earth) metal salts of bis(2,6-dibromo-4-cumylphenyl) phosphoric acid, bis(4-cumylphenyl) phosphoric acid, bis(2,4,6-tribromophenyl) phosphoric acid, bis(2,4-dibromophenyl) phosphoric acid, bis(4-bromophenyl) phosphoric acid, diphenylphosphoric acid, and bis(4-tert-butylphenyl) phosphoric acid.

Examples of the alkali (alkaline earth) metal salt of the aromatic imide include alkali (alkaline earth) metal salts of saccharin, N-(p-tolylsulfonyl)-p-toluenesulfonamide (in other words, di(p-toluenesulfone)imide), N-(N'-benzylaminocarbonyl) sulfanilimide, N-(phenylcarboxyl) sulfanilimide, and bis(diphenylphosphoric acid) imide.

Among these, one or more compounds selected from the group consisting of perfluoroalkyl sulfonic acid alkali (alkaline earth) metal salts, aromatic sulfonic acid alkali (alkaline earth) metal salts, and aromatic imide alkali (alkaline earth) metal salts are exemplified as preferable components, and among these, one or more compounds selected from the group consisting of potassium perfluorobutanesulfonate, sodium perfluorobutanesulfonate, a sulfonic acid salt of diphenylsulfone represented by the following general formula (4), a potassium salt of di(p-toluenesulfone)imide, and a sodium salt of di(p-toluenesulfone)imide are more preferred. Potassium perfluorobutanesulfonate is most preferred.

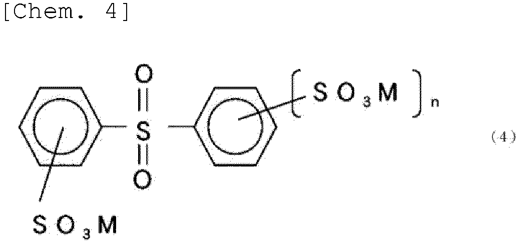

In the formula, n represents 0 to 3, and M represents K or Na.

The content of the component B is 0.005 to 0.15 parts by weight, preferably 0.01 to 0.12 parts by weight, more preferably 0.03 to 0.1 parts by weight, and particularly preferably 0.05 to 0.1 parts by weight with respect to 100 parts by weight of the component A. When the content of the component B is less than 0.005 part by weight, the flame retardancy of the resin composition becomes insufficient. On the other hand, when the content is more than 0.15 parts by weight, the light transmittance of infrared radiation is reduced.

### (Component C: Colorant having Absorption Maximum at Wavelength of less than 680 nm)

The aromatic polycarbonate resin composition of the present invention contains a colorant having an absorption maximum at a wavelength of less than 680 nm. When the wavelength at which the absorption maximum exists is more than 680 nm, a sufficient blocking property at 400 to 700 nm cannot be obtained. The lower limit of the wavelength at which the absorption maximum exists is not particularly specified, and is preferably 300 nm. The colorant can be selected from various dyes, pigments, and the like as long as the aromatic polycarbonate resin composition of the present invention can be obtained. However, an inorganic pigment having absorption in a wide wavelength region ranging the visible region to the infrared region, such as carbon black, is not suitable because the addition of the inorganic pigment deteriorates the transmittance of infrared radiation used in a sensor. The use of a dye is preferred because the dye does not diffuse light irregularly on the surface of particles. Examples of a dye-based colorant include an anthraquinone-based colorant, a perinone-based colorant, a perylene-based colorant, a methine-based colorant, an azo-based colorant, a quinoline-based colorant, a phthalocyanine-based colorant, a squarylium-based colorant, and a heterocyclic colorant.

The content of the component C is 0.03 to 1.2 parts by weight, preferably 0.05 to 0.8 parts by weight, and more preferably 0.1 to 0.5 parts by weight with respect to 100 parts by weight of the component A. When the content of the component C is less than 0.03 part by weight, a sufficient blocking property at a wavelength of 400 nm to 700 nm cannot be obtained. On the other hand, when the content is more than 1.2 parts by weight, the flame retardancy of the resin composition is deteriorated.

### (Component D: Phenol-based Thermal Stabilizer)

The aromatic polycarbonate resin composition of the present invention contains a phenol-based thermal stabilizer. The phenol-based thermal stabilizer is not particularly limited as long as it has an antioxidation function, and examples thereof include n-octadecyl 3-(4'-hydroxy-3',5'-di-t-butylphenyl)propionate, tetrakis[methylene-3-(3',5'-di-t-butyl-4-hydroxyphenyl)propionate]methane, distearyl (4-hydroxy-3-methyl-5-t-butylbenzyl)malonate, triethylene glycol bis[3-(3-t-butyl-5-methyl-4-hydroxyphenyl)propionate], 1,6-hexanediol bis[3-(3,5-di-t-butyl-4-hydroxyphenyl)propionate], pentaerythrityl tetrakis[3-(3,5-di-t-butyl-4-hydroxyphenyl)propionate], 2,2-thiodiethylene bis[3-(3,5-di-t-butyl-4-hydroxyphenyl)propionate], 2,2-thiobis(4-methyl-6-t-butylphenol), 1,3,5-trimethyl-2,4,6-tris(3,5-di-t-butyl-4-hydroxybenzyl)benzene, tris(3,5-di-t-butyl-4-hydroxybenzyl) isocyanurate, 2,4-bis[(octylthio)methyl]-o-cresol, isooctyl 3-(3,5-di-t-butyl-4-hydroxyphenyl)propionate, 2,5,7,8-tetramethyl-2(4',8',12'-trimethyltridecyl)chroman-6-ol, and 3,3',3",5,5',5"-hexa-t-butyl-a,a',a"-(mesitylene-2,4,6-triyl)tri-p-cresol.

Among these, n-octadecyl 3-(4'-hydroxy-3',5'-di-t-butylphenyl)propionate, pentaerythrityl tetrakis[3-(3,5-di-t-butyl-4-hydroxyphenyl)propionate], 3,3',3",5,5',5"-hexa-t-butyl-a,a',a"-(mesitylene-2,4,6-triyl)tri-p-cresol, 2,2-thiodiethylene bis[3-(3,5-di-t-butyl-4-hydroxyphenyl)propionate], and the like are preferred.

The content of the component D is 0.01 to 0.5 parts by weight, preferably 0.015 to 0.3 parts by weight, and more preferably 0.02 to 0.2 parts by weight with respect to 100 parts by weight of the component A. When the content of the component D is less than 0.01 part by weight, the flame retardancy of the resin composition is deteriorated. On the other hand, when the content is more than 0.5 part by weight, the moisture and heat resistance of the resin composition is deteriorated.

### (Component E: Phosphorus-based Thermal Stabilizer)

The aromatic polycarbonate resin composition of the present invention contains a phosphorus-based thermal stabilizer. Examples of the phosphorus-based thermal stabilizer include phosphorous acid, phosphoric acid, phosphonous acid, phosphonic acid, esters thereof, and a tertiary phosphine. Specific examples of a phosphite compound include triphenyl phosphite, tris(nonylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, 2,2-methylenebis(4,6-di-tert-butylphenyl) octyl phosphite, tris(diethylphenyl) phosphite, tris(di-iso-propylphenyl) phosphite, tris(di-n-butylphenyl) phosphite, tris(2,4-di-tert-butylphenyl) phosphite, tris(2,6-di-tert-butylphenyl) phosphite, distearyl pentaerythritol diphosphite, bis(2,4-di-tert-butylphenyl) pentaerythritol diphosphite, bis(2,6-di-tert-butyl-4-methylphenyl) pentaerythritol diphosphite, bis(2,6-di-tert-butyl-4-ethylphenyl) pentaerythritol diphosphite, phenyl bisphenol A pentaerythritol diphosphite, bis(nonylphenyl) pentaerythritol diphosphite, and dicyclohexyl pentaerythritol diphosphite. As another phosphite compound, a phosphite compound that is reacted with a dihydric phenol and has a cyclic structure may also be used. Examples thereof include 2,2'-methylenebis(4,6-di-tert-butylphenyl)(2,4-di-tert-butylphenyl) phosphite, 2,2'-methylenebis(4,6-di-tert-butylphenyl)(2,4-tert-butyl-4-methylphenyl) phosphite, 2,2'-methylenebis(4-methyl-6-tert-butylphenyl)(2-tert-butyl-4-methylphenyl) phosphite, and 2,2'-ethylenebis(4-methyl-6-tert-butylphenyl)(2-tert-butyl-4-methylphenyl) phosphite.

Examples of a phosphate compound include tributyl phosphate, trimethyl phosphate, tricresyl phosphate, triphenyl phosphate, trichlorophenyl phosphate, triethyl phosphate, cresyl diphenyl phosphate, diphenylmonoorthoxenyl phosphate, tributoxyethyl phosphate, dibutyl phosphate, dioctyl phosphate, and diisopropyl phosphate. Triphenyl phosphate and trimethyl phosphate are preferred.

Examples of a phosphonite compound include tetrakis(2,4-di-tert-butylphenyl)-4,4'-biphenylenediphosphonite, tetrakis(2,4-di-tert-butylphenyl)-4,3'-biphenylenediphosphonite, tetrakis(2,4-di-tert-butylphenyl)-3,3'-biphenylenediphosphonite, tetrakis(2,6-di-tert-butylphenyl)-4,4'-biphenylenediphosphonite, tetrakis(2,6-di-tert-butylphenyl)-4,3'-biphenylenediphosphonite, tetrakis(2,6-di-tert-butylphenyl)-3,3'-biphenylenediphosphonite, bis(2,4-di-tert-butylphenyl)-4-phenyl-phenylphosphonite, bis(2,4-di-tert-butylphenyl)-3-phenyl-phenylphosphonite, bis(2,6-di-n-butylphenyl)-3-phenyl-phenylphosphonite, bis(2,6-di-tert-butylphenyl)-4-phenyl-phenylphosphonite, and bis(2,6-di-tert-butylphenyl)-3-phenyl-phenylphosphonite. Tetrakis(di-tert-butylphenyl)-biphenylenediphosphonite, and bis(di-tert-butylphenyl)-4-phenyl-phenylphosphonite are preferred. Tetrakis(2,4-di-tert-butylphenyl)-biphenylenediphosphonite, and bis(2,4-di-tert-butylphenyl)-phenyl-phenylphosphonite are more preferred. Such phosphonite compounds are preferred because the phosphonite compounds can be used in combination with a phosphite compound having an aryl group obtained by substituting two or more alkyl groups of the compounds. Examples of a phosphonate compound include dimethyl benzenephosphonate, diethyl benzenephosphonate, and dipropyl benzenephosphonate.

Examples of a tertiary phosphine include triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-p-tolylphosphine, trinaphthylphosphine, and diphenylbenzylphosphine. A particularly preferable tertiary phosphine is triphenylphosphine. Not only one kind but also two or more kinds of the phosphorus-based thermal stabilizers may be mixed for use. Among the phosphorus-based thermal stabilizers, an alkyl phosphate compound typified by trimethyl phosphate is preferably blended. The use of such an alkyl phosphate compound in combination with a phosphite compound and/or a phosphonite compound is also a preferable aspect.

The content of the component E is 0.025 to 0.5 parts by weight, preferably 0.025 to 0.3 parts by weight, and more preferably 0.03 to 0.2 parts by weight with respect to 100 parts by weight of the component A. When the content of the component E is less than 0.025 part by weight, the flame retardancy of the resin composition is deteriorated. On the other hand, when the content is more than 0.5 part by weight, the moisture and heat resistance of the resin composition is deteriorated.

The total content of the component D and the component E is 0.6 part by weight or less, preferably 0.4 part by weight or less, and more preferably 0.3 part by weight or less. When the total content is more than 0.6 part by weight, the moisture and heat resistance of the resin composition is deteriorated. The lower limit of the total content is not particularly limited, and is preferably 0.035 part by weight.

### (Component F: Colorant having Absorption Maximum at Wavelength of 680 nm or more and less than 1,000 nm)

The aromatic polycarbonate resin composition of the present invention contains a colorant having an absorption maximum at a wavelength of 680 nm or more and less than 1,000 nm. The colorant can be selected from various dyes, pigments, and the like as long as the aromatic polycarbonate resin composition of the present invention can be obtained. However, an inorganic pigment having absorption in a wide wavelength region ranging the visible region to the infrared region, such as carbon black, is not suitable because the addition of the inorganic pigment deteriorates the transmittance of infrared radiation used in a sensor. The use of a dye is preferred because the dye does not diffuse light irregularly on the surface of particles. Examples of a dye-based colorant include an anthraquinone-based colorant, a perinone-based colorant, a perylene-based colorant, a methine-based colorant, an azo-based colorant, a quinoline-based colorant, a phthalocyanine-based colorant, a squarylium-based colorant, and a heterocyclic colorant. Among these, an anthraquinone-based colorant, a phthalocyanine-based colorant, a perylene-based colorant, and a heterocyclic colorant, which have high heat resistance, are more preferred.

The content of the component F is 0.001 to 1.2 parts by weight, preferably 0.003 to 0.5 parts by weight, and more preferably 0.005 to 0.3 parts by weight with respect to 100 parts by weight of the component A. When the content of the component F is less than 0.001 part by weight, a sufficient blocking property at a wavelength of 400 nm to a wavelength in which the absorption of the component F is maximum may not be obtained. On the other hand, when the content is more than 1.2 parts by weight, the flame retardancy of the resin composition may be deteriorated.

The total content of the component C and the component F is preferably 1.3 parts by weight or less, more preferably 1.0 parts by weight or less, and still more preferably 0.8 part by weight or less. When the total content is more than 1.3 parts by weight, the flame retardancy of the resin composition may be deteriorated. The lower limit of the total content is not particularly limited, and is preferably 0.031 part by weight.

### (Component G: Silicone Compound having Si-H group in Molecule)

The resin composition of the present invention may contain a silicone compound having a Si-H group in the molecule. A silicone compound used as a silicone-based flame retardant is one that improves flame retardancy by a chemical reaction during combustion. Various compounds conventionally proposed as a flame retardant for an aromatic polycarbonate resin may be used as the compound. It is conceived that due to formation of a structure by binding the silicone compound itself during combustion or binding the silicone compound to a compound derived from a resin, or a reduction reaction during formation of the structure, a high flame-retardant effect is imparted particularly when a polycarbonate resin is used.

Therefore, the silicone compound needs to have a group having a high activity in the reaction, and specifically needs to have a Si-H group. The content ratio of the Si-H group is preferably in the range of 0.1 to 1.2 mol/100 g, more preferably in the range of 0.12 to 1 mol/100 g, and still more preferably in the range of 0.15 to 0.6 mol/100 g. The content ratio is determined by measuring the amount hydrogen or alcohol generated per the unit weight of the silicone compound by alkali decomposition.

The structure of the silicone compound generally includes any combination of four siloxane units described below. That is, the four siloxane units are M unit: a monofunctional siloxane unit such as (CH₃)₃SiO_{1/2}, H(CH₃)₂SiO_{1/2}, H₂(CH₃)SiO_{1/2}, (CH₃)₂(CH₂=CH)SiO_{1/2}, (CH₃)₂(C₆H₅)SiO_{1/2}, or (CH₃)(C₆H₅)(CH₂=CH)SiO_{1/2}, D unit: a bifunctional siloxane unit such as (CH₃)₂SiO, H(CH₃)SiO, H₂SiO, H(C₆H₅)SiO, (CH₃)(CH₂=CH)SiO, or (C₆H₅)₂SiO, T unit: a trifunctional siloxane unit such as (CH₃)SiO_{3/2}, (C₃H₇)SiO_{3/2}, HSiO_{3/2}, (CH₂=CH)SiO_{3/2}, or (C₆H₅)SiO_{3/2}, and Q unit: a tetrafunctional siloxane unit represented by SiO₂.

Specific examples of the rational formula of the structure of the silicone compound used for the silicone-based flame retardant include Dn, Tp, MmDn, MmTp, MmQq, MmDnTp, MmDnQq, MmTpQq, MmDnTpQq, DnTp, DnQq, and DnTpQq. Among these, the structure of the silicone compound is preferably MmDn, MmTp, MmDnTp, or MmDnQq, and more preferably MmDn or MmDnTp.

Here, the coefficients m, n, p, and q in the rational formula are an integer representing the degree of polymerization of each of the siloxane units, and the sum of the coefficients in each of the rational formulae represents the average degree of polymerization of the silicone compound. The average degree of polymerization is preferably in the range of 3 to 150, more preferably in the range of 3 to 80, still more preferably in the range of 3 to 60, and particularly preferably in the range of 4 to 40. When the average degree of polymerization is in the suitable range, the resin composition may be excellent in flame retardancy. Furthermore, when the silicone compound contains a predetermined amount of an aromatic group described below, the resin composition may be excellent in transparency and hue. As a result, favorable reflective light is achieved. When any of m, n, p, and q is a numerical value of 2 or more, the siloxane unit to which the coefficient is applied may be two or more kinds of siloxane units having different hydrogen atoms or organic groups to be bound.

The silicone compound may be linear or have a branched structure. An organic group bound to a silicon atom is preferably an organic group having 1 to 30 carbon atoms, and more preferably an organic group having 1 to 20 carbon atoms. Specific examples of the organic group include alkyl groups such as a methyl group, an ethyl group, a propyl group, a butyl group, a hexyl group, and a decyl group, cycloalkyl groups such as a cyclohexyl group, aryl groups such as a phenyl group, and aralkyl groups such as a tolyl group. An alkyl group having 1 to 8 carbon atoms, an alkenyl group having 1 to 8 carbon atoms, and an aryl group having 1 to 8 carbon atoms are more preferred. The alkyl group is particularly preferably an alkyl group having 1 to 4 carbon atoms, such as a methyl group, an ethyl group, and a propyl group. Furthermore, the silicone compound used as the silicone-based flame retardant preferably has an aryl group. On the other hand, in terms of achieving a more preferable effect due to the absence of an aryl group, a silane compound and a siloxane compound serving as an organic surface treatment agent for a titanium dioxide pigment are clearly distinguished from the silicone-based flame retardant in the suitable aspect. The silicone compound used as the silicone-based flame retardant may have a reactive group in addition to the Si-H group, and examples of the reactive group include an alkoxy group, an amino group, a carboxy group, an epoxy group, a vinyl group, a mercapto group, and a methacryloxy group.

The content of the component G is preferably 0.1 to 6 parts by weight, more preferably 0.3 to 5 parts by weight, and still more preferably 0.5 to 4 parts by weight with respect to 100 parts by weight of the component A.

When the content of the component G is less than 0.1 part by weight, the flame retardancy may be insufficient. On the other hand, when the content is more than 6 parts by weight, the light transmittance at a wavelength of an infrared region including 1,550 nm may be deteriorated.

### (Component H: Benzotriazole-based Ultraviolet Absorber and/or Triazine-based Ultraviolet Absorber)

The aromatic polycarbonate resin composition of the present invention preferably contains a benzotriazole-based ultraviolet absorber and/or a triazine-based ultraviolet absorber.

Examples of the benzotriazole-based ultraviolet absorber include 2-(2-hydroxy-5-methylphenyl)benzotriazole, 2-(2-hydroxy-5-tert-octylphenyl)benzotriazole, 2-[2-hydroxy-3,5-bis(α,α-dimethylbenzyl)phenyl]-2H-benzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylophenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole, and polymers having a 2-hydroxyphenyl-2H-benzotriazole skeleton such as a copolymer of 2-(2'-hydroxy-5'-methacryloxyethylphenyl)-2H-benzotriazole and a vinyl-based monomer copolymerizable with the monomer, and a copolymer of 2-(2'-hydroxy-5'-acryloxyethylphenyl)-2H-benzotriazole and a vinyl-based monomer copolymerizable with the monomer. Furthermore, the ultraviolet absorber may be a polymeric ultraviolet absorber in which a ultraviolet absorbing monomer and/or a light stable monomer, and a monomer such as alkyl (meth)acrylate are copolymerized because the ultraviolet absorber has a structure of a monomer compound capable of radical polymerization. Suitable examples of the ultraviolet absorbing monomer include compounds having a benzotriazole skeleton in an ester substituent of (meth)acrylate. Among these, 2-[2-hydroxy-3,5-bis(α,α-dimethylbenzyl)phenyl]-2H-benzotriazole typified by Tinuvin 234 (BASF Japan Ltd.), and 2-(2-hydroxy-3-tert-butyl-5-methylphenyl)-5-chlorobenzotriazole typified by Tinuvin 326 (BASF Japan Ltd.) are more preferred.

Examples of the triazine-based ultraviolet absorber include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol, and 2-(4,6-diphenyl-1,3,5-triazin-2-yl)-5-butyloxyphenol. Other examples thereof include compounds in which the phenyl group of the above-mentioned compounds is replaced by a 2,4-dimethylphenyl group, such as 2-(4,6-bis(2,4-dimethylphenyl)-1,3,5-triazin-2-yl)-5-hexyloxyphenol.

The content of the component H is preferably 0.01 to 1 parts by weight, more preferably 0.03 to 0.8 parts by weight, and still more preferably 0.05 to 0.5 parts by weight with respect to 100 parts by weight of the component A. When the content of the component G is less than 0.01 part by weight, the light stability with an absorption property may be deteriorated. On the other hand, when the content is more than 1 part by weight, the thermal stability of the resin composition may be reduced.

### (Other Additive)

For the aromatic polycarbonate resin composition of the present invention, another additive may be used. Hereinafter, the additive will be specifically described.

### (I) Thermal Stabilizer other than Component D and Component E

In the aromatic polycarbonate resin composition of the present invention, a thermal stabilizer other than the component D and the component E may be blended. Suitable examples of the other thermal stabilizer include a lactone-based stabilizer typified by a product of a reaction between 3-hydroxy-5,7-di-tert-butyl-furan-2-one and o-xylene. The details of the stabilizer are described in JPH7-233160A. Such a compound is commercially available under the name Irganox HP-136 (trademark, manufactured by Ciba Specialty Chemicals), and may be utilized. Furthermore, a stabilizer in which the compound is mixed with various phosphite compounds or hindered phenol compounds is commercially available. Suitable examples thereof include Irganox HP-2921 manufactured by Ciba Specialty Chemicals. The content of the lactone-based stabilizer is preferably 0.0005 to 0.05 parts by weight, and more preferably 0.001 to 0.03 parts by weight with respect to 100 parts by weight of the component A. Examples of the other stabilizer include sulfur-containing stabilizers such as pentaerythritol tetrakis(3-mercaptopropionate), pentaerythritol-tetrakis(3-laurylthiopropionate), and glycerol-3-stearylthiopropionate. The content of the sulfur-containing stabilizer is preferably 0.001 to 0.1 parts by weight, and more preferably 0.01 to 0.08 parts by weight with respect to 100 parts by weight of the component A. In the aromatic polycarbonate resin composition of the present invention, an epoxy compound may be blended as required. The epoxy compound is to be blended to suppress mold corrosion, and all compounds having an epoxy-functional group may be essentially adopted. Specific examples of a preferable epoxy compound include 3,4-epoxycyclohexylmethyl-3',4'-epoxycyclohexylcarboxylate, 1,2-epoxy-4-(oxiran-2-yl)cyclohexane adduct of 2,2-bis(hydroxymethyl)-1-butanol, a copolymer of methyl methacrylate with glycidyl methacrylate, and a copolymer of styrene with glycidyl methacrylate. The content of the epoxy compound is preferably 0.003 to 0.2 parts by weight, more preferably 0.004 to 0.15 parts by weight, and still more preferably 0.005 to 0.1 parts by weight with respect to 100 parts by weight of the component A.

### (II) Release Agent

In order to further improve releasability from a mold during melt molding, the aromatic polycarbonate resin composition of the present invention may contain a release agent without departing from the object of the present invention.

Examples of the release agent include higher fatty acid esters of monohydric or polyhydric alcohols, a higher fatty acid, a paraffin wax, a beeswax, an olefinic wax, an olefinic wax having a carboxy group and/or a carboxylic anhydride group, a silicone oil, and an organopolysiloxane. The higher fatty acid ester is preferably partially or fully esterified fatty acid of a monohydric or polyhydric alcohol having 1 to 20 carbon atoms and a saturated fatty acid having 10 to 30 carbon atoms. Examples of the partially or fully esterified fatty acid of the monohydric or polyhydric alcohol and the saturated fatty acid include monoglyceride stearate, diglyceride stearate, triglyceride stearate, stearic acid monosorbitate, stearyl stearate, monoglyceride behenate, behenyl behenate, pentaerythritol monostearate, pentaerythritol tetrastearate, pentaerythritol tetrapelargonate, propylene glycol monostearate, palmityl palmitate, butyl stearate, methyl laurate, isopropyl palmitate, biphenyl biphenate, sorbitan monostearate, and 2-ethylhexyl stearate. Among these, monoglyceride stearate, triglyceride stearate, pentaerythritol tetrastearate, or behenyl behenate is preferably used. The higher fatty acid is preferably a saturated fatty acid having 10 to 30 carbon atoms. Examples of the fatty acid include myristic acid, lauric acid, palmitic acid, stearic acid, and behenic acid.

One kind of the release agents may be used alone or two or more kinds thereof may be used in combination. The content of the release agent is preferably 0.01 to 1 parts by weight with respect to 100 parts by weight of the component A.

### (Method for Producing Resin Composition)

In production of the aromatic polycarbonate resin composition of the present invention, any method is adopted. Examples of the method include a method in which the components and any additional component are pre-mixed, then melted and kneaded, and pelletized. Examples of a pre-mixing means include a Nauta mixer, a V-shell blender, a Henschel mixer, a mechanochemical apparatus, and an extrusion mixer. In pre-mixing, granulating may also be carried out using an extrusion granulator, a briquetting machine, or the like in some cases. After the pre-mixing, the mixture is melted and kneaded using a melt-kneader typified by a vented twin-screw extruder, and pelletized using a device such as a pelletizer. Other examples of the melt-kneader include a Banbury mixer, a kneading roll, and a constant-temperature stirring container, and the vented twin-screw extruder is preferred. In addition, a method in which the components and any additional component are each independently supplied to a melt-kneader typified by a twin-screw extruder without pre-mixing these components may also be adopted.

### (Molded Article)

Pellets produced as described above can be injection-molded to produce various products. Alternatively, a resin melted and kneaded using an extruder can be molded directly into a sheet, a film, a profile extrusion molded article, and an injection molded article without forming pellets. In the injection molding, a molded article can be obtained by an ordinary molding method and as appropriate depending on the purpose, by an injection molding method such as injection compression molding, injection press molding, gas-assisted injection molding, foam molding (including injection of supercritical fluid), insert molding, in-mold coating molding, thermal insulation mold molding, rapid heating and cooling mold molding, double molding, sandwich molding, and ultra-high-speed injection molding. Advantages of these molding methods are widely known. In molding, any of a cold runner mode and a hot runner mode can be selected. In addition, the resin composition of the present invention can be molded into various profile extrusion molded articles and a sheet by extrusion molding.

For a molded article formed from the resin composition of the present invention, the average value of light transmittance at a wavelength of 400 to 700 nm in the thickness direction of the molded article having a thickness of 3 mm needs to be 1.5% or less. The average value of light transmittance is preferably 1.0% or less, and more preferably 0.5% or less. When the average value of light transmittance is more than 1.5%, the amount of sunlight that becomes noise is large, and sensing is adversely affected. The lower limit of the average value of light transmittance is not particularly limited, and is preferably 0%.

For the molded article formed from the resin composition of the present invention, the light transmittance at a wavelength of 1,550 nm in the thickness direction of the molded article having a thickness of 3 mm needs to be 80% or more. The light transmittance is preferably 83% or more, and more preferably 86% or more. When the light transmittance is less than 80%, sensing is adversely affected. The upper limit of the light transmittance is not particularly limited, and is preferably 100%.

Further, for the molded article formed from the resin composition of the present invention, the average value of light transmittance at a wavelength of 700 nm to a wavelength at which the absorption of the component F is maximum in the thickness direction of the molded article having a thickness of 3 mm is preferably 1.5% or less, more preferably 1.0% or less, and still more preferably 0.5% or less. When the average value of light transmittance is more than 1.5%, the amount of sunlight that becomes noise is large, and sensing may be adversely affected. The lower limit of the average value of light transmittance is not particularly limited, and is preferably 0%.

### Examples

Hereinafter, the present invention will be more specifically described using Examples, but is not limited to these examples. "Part(s)" means part(s) by weight unless otherwise specified. Evaluation was carried out in accordance with the following methods.

### [Evaluation of Resin Composition]

### 1. Flame Retardancy

Molded articles for evaluation of flame retardancy having a thickness of 1.5 mm and 1.8 mm produced by the following method were subjected to the UL94 vertical burning test, and the grades thereof were evaluated. A case where any standard of V-0, V-1, and V-2 cannot be satisfied by judgement is expressed by "notV". For flame retardancy, V-0 is required in the evaluation of the molded article having a thickness of 1.8 mm.

### 2. Visible Light Absorption Property (the average value of light transmittance at a wavelength of 400 to 700 nm and a wavelength of 700 nm to the absorption maximum wavelength of a component F)

For a molded article for optical evaluation produced by the following method, the spectral light transmittance at a wavelength of 300 to 2,500 nm was measured using a ultraviolet-visible-near infrared spectrophotometer (V-770 manufactured by JASCO Corporation). From the resultant spectroscopic spectrum, the average value T_{400 to 700} of light transmittance at a wavelength of 400 to 700 nm and the average value T_{700 to F} of light transmittance at a wavelength of 700 nm to the absorption maximum wavelength of a component F were calculated.

### 3. Infrared Radiation Transmission Property

The spectral light transmittance of a molded article for optical evaluation was measured in the same manner as in "2. visible light absorption property". From the resultant spectroscopic spectrum, the light transmittance T_{1,550} at a wavelength of 1,550 nm was read.

### 4. Light Stability of Absorption Property

The spectral light transmittance of a molded article for optical evaluation was measured in the same manner as in "2. visible light absorption property". The resultant spectroscopic spectrum was scanned from a wavelength of 400 nm to a longer wavelength, and a wavelength at which the transmittance first reached 70% or more (transmitted wavelength λt) was read. For a light-exposed article, the transmitted wavelength λtx was read in the same manner. When λtx-λt is from 0 to -5, from -6 to -10, from -11 to - 20, or -21 or less, the light stability is evaluated as A, B, C, or D, respectively.

### 5. Moisture and Heat Resistance (viscosity-average molecular weight)

The viscosity-average molecular weight (Mₒ) of a molded article for optical evaluation and the viscosity-average molecular weight (M_{w}) of a wet-heat-treated article were measured by the following method. When Mₒ-M_{w}<1,500 is satisfied, the moisture and heat resistance is evaluated as A, and when Mₒ-M_{w}<1,500 is not satisfied, the moisture and heat resistance is evaluated as B.

The viscosity-average molecular weight (M) was determined as follows. A specific viscosity (ηSP) calculated by the following equation was determined using an Ostwald viscometer from a solution in which 0.7 g of a molded article obtained by the following method was dissolved at 20°C in 100 mL of methylene chloride.
Specific viscosity: (ηSP)=(t-t₀)/t₀,
in which t₀ represents the falling time (second) of methylene chloride, and t represents the falling time (second) of the sample solution.

The viscosity-average molecular weight M was calculated from the determined specific viscosity (ηSP) by the following equation: $ηSP / c = \left[η\right] + 0.45 \times {\left[η\right]}^{2} c$ in which [η] represents an intrinsic viscosity. $\left[η\right] = 1.23 \times {10}^{- 4} {M}^{0.83}$ $c = 0.7$

### [Examples 1 to 42 and Comparative Examples 1 to 12]

### 1. Production of Resin Pellets

Blending components were mixed using a tumbler in accordance with components and contents shown in Tables 1 to 3, and melted and kneaded at a cylinder temperature of 280°C using a twin-screw extruder (TEX30α manufactured by The Japan Steel Works, Ltd.) to obtain various pellets.

### 2. Production of Molded Article for Evaluation of Flame Retardancy

The pellets obtained by the above-mentioned method were dried at 120°C for 5 hours in a hot-air-circulating dryer, and molded under conditions of a cylinder temperature of 300°C and a mold temperature of 90°C using an injection molding apparatus (NEX50-5E manufactured by Nissei Plastic Industrial Co., Ltd.) to obtain molded articles for evaluation of flame retardancy having a thickness of 1.5 mm and 1.8 mm in accordance with UL94.

### 3. Production of Molded Article for Optical Evaluation

The pellets obtained by the above-mentioned method were dried at 120°C for 5 hours in a hot-air-circulating dryer, and molded under conditions of a cylinder temperature of 300°C and a mold temperature of 90°C using an injection molding apparatus (ROBOSHOTα-S100iA manufactured by FANUC Corporation) to obtain a molded article for optical evaluation having a thickness of 3 mm.

### 4. Light Exposure Treatment of Molded Article for Optical Evaluation

The molded article for optical evaluation obtained by the above-mentioned method was subjected to light exposure treatment for 1,000 hours using a xenon weather meter (NX75Z manufactured by Suga Test Instruments Co., Ltd.) under conditions of a black panel temperature of 63°C, a chamber temperature of 50°C, a relative humidity of 50%, and an irradiation strength of 0.35 W/m² (at 340 nm). Thus, a light-exposed molded article was obtained from the molded article.

### 5. Wet Heat Treatment of Molded Article for Optical Evaluation

The molded article for optical evaluation obtained by the above-mentioned method was subjected to wet heat treatment for 1,000 hours using a temperature and humidity chamber (PR-3J manufactured by ESPEC CORP.) under conditions of a temperature of 80°C and a humidity of 85%. Thus, a wet-heat-treated molded article was obtained from the molded article.

### (Component A)

A-1-1: Panlite L-1250WQ (manufactured by Teijin Limited, viscosity-average molecular weight: 25,100)
A-2-1: an aromatic polycarbonate resin having a branched structure (branching ratio: 0.28 mol%, viscosity-average molecular weight: 25,000)

### (Method for Producing A-2-1)

Into a reactor equipped with a thermometer, a stirrer, and a reflux condenser, 2,340 Parts of ion-exchanged water, 947 parts of a 25% aqueous sodium hydroxide solution, and 0.7 part of hydrosulfite were put, 710 parts of bisphenol A was dissolved under stirring (bisphenol A solution), 2,299 parts of methylene chloride, 112 parts of a 48.5% aqueous sodium hydroxide solution, and 10.7 parts (0.28 mol%) of an aqueous solution in which 1,1,1-tris(4-hydroxyphenyl)ethane was dissolved at a concentration of 25% in a 14% aqueous sodium hydroxide solution were added, and 348 parts of phosgene was blown at 15 to 25°C over about 90 minutes to cause a phosgenation reaction. After the completion of phosgenation, 160 parts of a 11% methylene chloride solution of p-tert-butylphenol and 88 parts of a 48.5% aqueous sodium hydroxide solution were added, stirring was stopped, and the mixture was allowed to stand for 10 minutes, resulting in separation. After that, stirring was carried out, resulting in emulsification, and after 5 minutes, the mixture was treated using a homomixer (Tokushu Kika Kogyo Co., Ltd.) at a rotation speed of 1,200 rpm and a number of passes of 35 to obtain a highly-emulsified dope. The highly-emulsified dope was subjected to a reaction in a polymerization tank (equipped with a stirrer) at a temperature of 35°C for 3 hours under no stirring conditions, to complete the polymerization. After completion of the reaction, 5,728 parts of methylene chloride was added, resulting in dilution. From the reaction mixed solution, a methylene chloride phase was separated, 5,000 parts of ion-exchanged water was added to the separated methylene chloride phase, and mixed with stirring, the stirring was stopped, and the aqueous phase and the organic phase were separated. Next, water-washing was repeated until the conductivity of the aqueous phase was substantially the same as that of ion-exchanged water, and as a result, a purified polycarbonate resin solution was obtained. Next, methylene chloride was evaporated in the purified polycarbonate resin solution using a 1,000 L kneader charged with 100 L of ion-exchanged water at a liquid temperature of 75°C, to obtain a powder. 25 Parts of the powder and 75 parts of water were put into a hot water treatment tank equipped with a stirrer, and mixed with stirring at a water temperature of 95°C for 30 minutes. Subsequently, the mixture of the powder and water was separated with a centrifugal separator, to obtain the powder containing 0.5 wt% of methylene chloride and 45 wt% of water. Next, this powder was continuously supplied to a heat-conduction-type trough twin-screw stirring continuous dryer made of SUS316L that was controlled to 140°C at 50 kg/hr (in terms of polycarbonate resin), and dried under conditions of an average drying time of 3 hours, to obtain a polycarbonate resin having a branched structure.

### A-2-2: an aromatic polycarbonate resin having a branched structure (branching ratio: 0.41 mol%, viscosity-average molecular weight: 25,000)

### (Method for Producing A-2-2)

A polycarbonate resin having a branched structure was obtained by the same method as the method for producing A-2-1 except that the amount of phosgene was changed to 350 parts, the amount of an aqueous solution in which 1,1,1-tris(4-hydroxyphenyl)ethane was dissolved in a aqueous 14% sodium hydroxide solution at a concentration of 25% was changed to 16.0 parts (0.42 mol%), and the amount of a 11% methylene chloride solution of p-tert-butylphenol was changed to 184 parts.

### A-2-3: an aromatic polycarbonate resin having a branched structure (branching ratio: 0.71 mol%, viscosity-average molecular weight: 25,200)

### (Method for Producing A-2-3)

A polycarbonate resin having a branched structure was obtained by the same method as the method for producing A-2-1 except that the amount of phosgene was changed to 352 parts, the amount of an aqueous solution in which 1,1,1-tris(4-hydroxyphenyl)ethane was dissolved in a aqueous 14% sodium hydroxide solution at a concentration of 25% was changed to 28.6 parts (0.75 mol%), and the amount of a 11% methylene chloride solution of p-tert-butylphenol was changed to 209 parts.

### A-2-4: an aromatic polycarbonate resin having a branched structure (branching ratio: 0.95 mol%, viscosity-average molecular weight: 20,300)

### (Method for Producing A-2-4)

A polycarbonate resin having a branched structure was obtained by the same method as the method for producing A-2-1 except that the amount of phosgene was changed to 354 parts, the amount of an aqueous solution in which 1,1,1-tris(4-hydroxyphenyl)ethane was dissolved in a aqueous 14% sodium hydroxide solution at a concentration of 25% was changed to 38.1 parts (1.00 mol%), and the amount of a 11% methylene chloride solution of p-tert-butylphenol was changed to 261 parts.

### A-2-5: an aromatic polycarbonate resin having a branched structure (branching ratio: 1.20 mol%, viscosity-average molecular weight: 25,000)

### (Method for Producing A-2-5)

A polycarbonate resin having a branched structure was obtained by the same method as the method for producing A-2-1 except that the amount of phosgene was changed to 356 parts, the amount of an aqueous solution in which 1,1,1-tris(4-hydroxyphenyl)ethane was dissolved in a aqueous 14% sodium hydroxide solution at a concentration of 25% was changed to 47.6 parts (1.25 mol%), and the amount of a 11% methylene chloride solution of p-tert-butylphenol was changed to 229 parts.

### A-2-6: an aromatic polycarbonate resin having a branched structure (branching ratio: 1.46 mol%, viscosity-average molecular weight: 20,100)

### (Method for Producing A-2-6)

A polycarbonate resin having a branched structure was obtained by the same method as the method for producing A-2-1 except that the amount of phosgene was changed to 359 parts, the amount of an aqueous solution in which 1,1,1-tris(4-hydroxyphenyl)ethane was dissolved in a aqueous 14% sodium hydroxide solution at a concentration of 25% was changed to 59.8 parts (1.57 mol%), and the amount of a 11% methylene chloride solution of p-tert-butylphenol was changed to 280 parts.

### A-2-7 (Comparative Example): an aromatic polycarbonate resin having a branched structure (branching ratio: 1.52 mol%, viscosity-average molecular weight: 24,800)

### (Method for Producing A-2-7)

A polycarbonate resin having a branched structure was obtained by the same method as the method for producing A-2-1 except that the amount of phosgene was changed to 357 parts, the amount of an aqueous solution in which 1,1,1-tris(4-hydroxyphenyl)ethane was dissolved in a aqueous 14% sodium hydroxide solution at a concentration of 25% was changed to 61.0 parts (1.60 mol%), and the amount of a 11% methylene chloride solution of p-tert-butylphenol was changed to 245 parts.

### (Component B)

B-1: perfluorobutanesulfonic acid potassium salt (Dainippon Ink and Chemicals, Incorporated, MEGAFACE F-114P)
B-2: perfluorobutanesulfonic acid sodium salt (Dainippon Ink and Chemicals, Incorporated, MEGAFACE F-114S)
B-3: potassium diphenylsulfone sulfonate (UCB Japan, KSS)

### (Component C)

C-1: NUBIAN BLACK PC-5857 (Orient Chemical Industries Co., Ltd., a dye having an absorption maximum wavelength of 599 nm)
C-2: Lumogen Black K0088 (BASF Japan Ltd., an organic pigment having an absorption maximum wavelength of 669 nm)
C-3 (Comparative Example): SBF-T-5669G (Resino Color Industry Co., Ltd., carbon black master of carbon black having an absorption maximum wavelength of less than 680 nm and a polystyrene resin)

### (Component D)

D-1: phenol-based thermal stabilizer AO-50 (ADEKA Corporation)
D-2: phenol-based thermal stabilizer AO-80 (ADEKA Corporation)

### (Component E)

E-1: phosphorus-based thermal stabilizer 2112 (ADEKA Corporation)
E-2: phosphorus-based thermal stabilizer PEP-36 (ADEKA Corporation)

### (Component F)

F-1: phthalocyanine-based colorant FDR-004 (Yamada Chemical Co., Ltd., absorption maximum wavelength: 720 nm)
F-2: anthraquinone-based colorant SDO-7 (Arimoto Chemical Co., Ltd., absorption maximum wavelength: 676 nm)
F-3: anthraquinone-based colorant SDO-11 (Arimoto Chemical Co., Ltd., absorption maximum wavelength: 761 nm)
F-4: heterocyclic colorant SDO-C33 (Arimoto Chemical Co., Ltd., absorption maximum wavelength: 847 nm)
F-5: perylene-based colorant Lumogen IR-765 (BASF Japan Ltd., absorption maximum wavelength: 769 nm)
F-6: phthalocyanine-based colorant FDN-008 (Yamada Chemical Co., Ltd., absorption maximum wavelength: 992 nm)

### (Component G)

G-1: a silicone compound having a Si-H group in a molecule X40-2600J (Shin-Etsu Chemical Co., Ltd.)
G-2: a silicone compound having a Si-H group in a molecule KF-56 (Shin-Etsu Chemical Co., Ltd.)

### (Component H)

H-1: benzotriazole-based ultraviolet absorber SEESORB709 (Shipro Kasei Kaisha, Ltd.)
H-2: benzotriazole-based ultraviolet absorber Tinuvin 234 (BASF Japan Ltd.)
H-3: benzotriazole-based ultraviolet absorber Tinuvin 326 (BASF Japan Ltd.)
H-4: benzotriazole-based ultraviolet absorber ADKSTAB LA-31 (ADEKA Corporation)
H-5: triazine-based ultraviolet absorber Tinuvin 1577 (BASF Japan Ltd.)

### (Other Component)

I-1: release agent UNISTER H476S (NOF Corporation)
J-1: antirust agent MARPROOF G-0250SP (NOF Corporation)

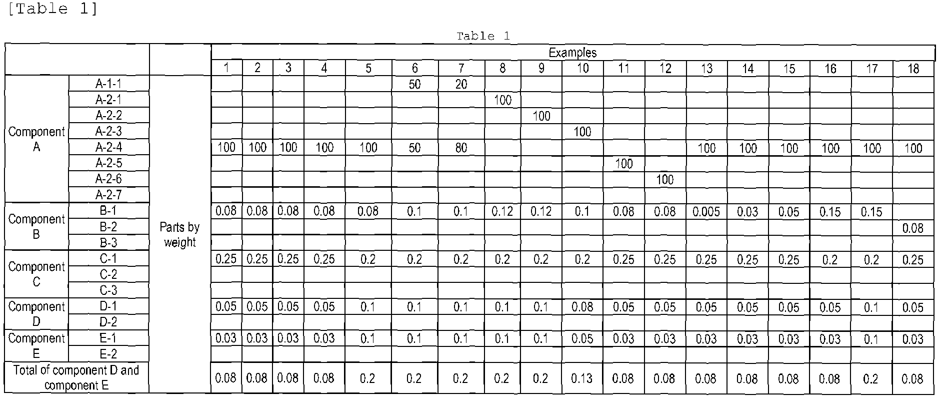

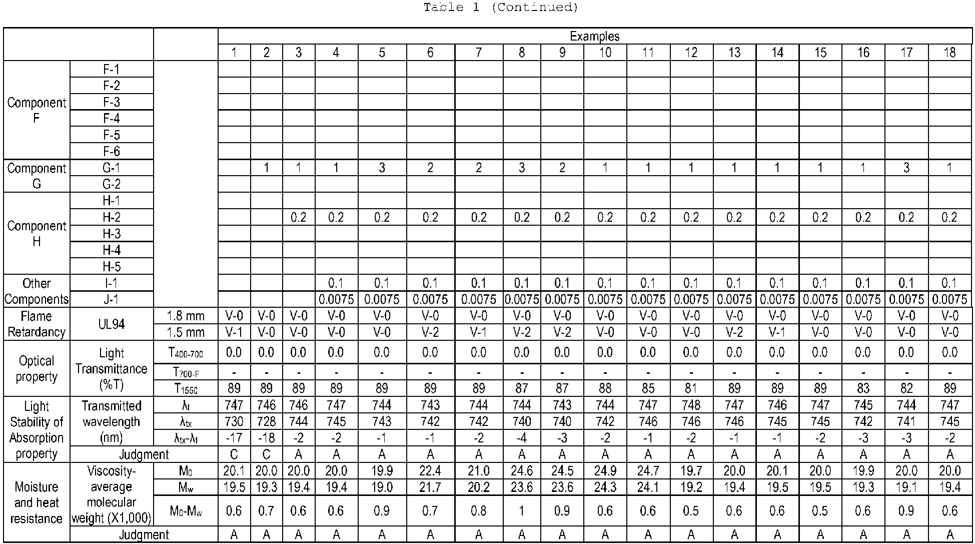

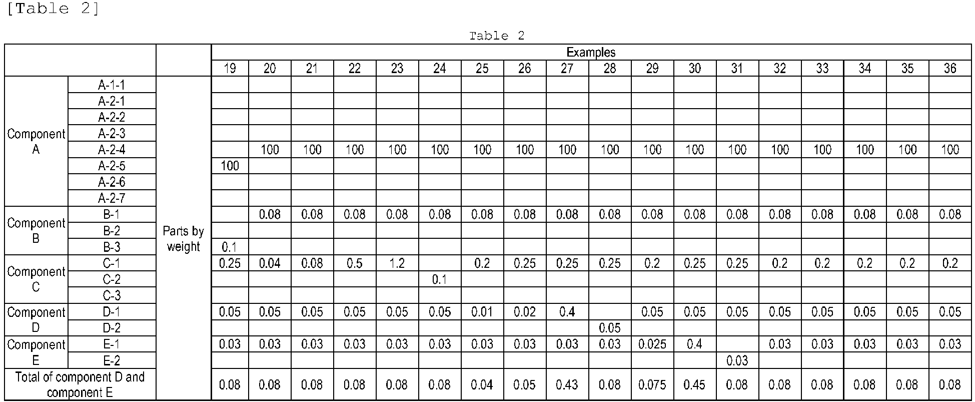

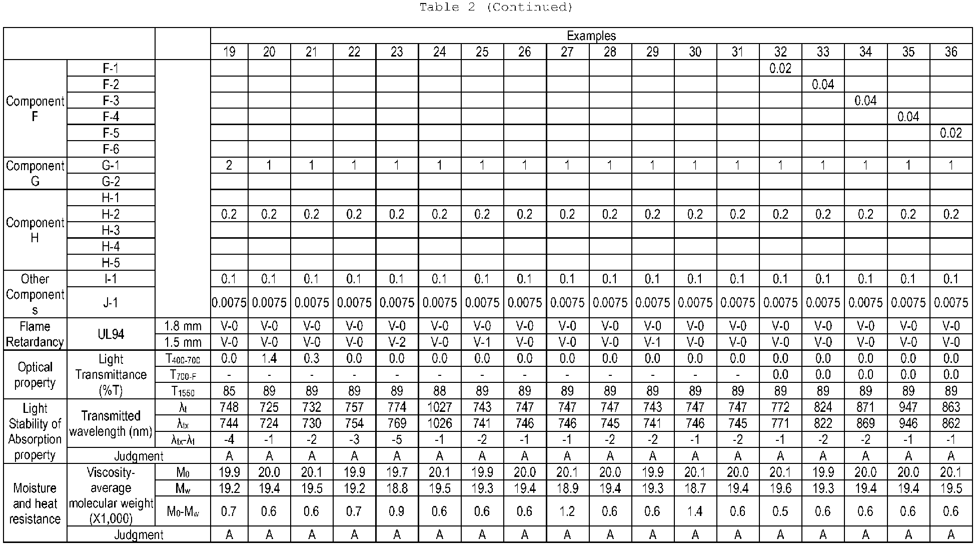

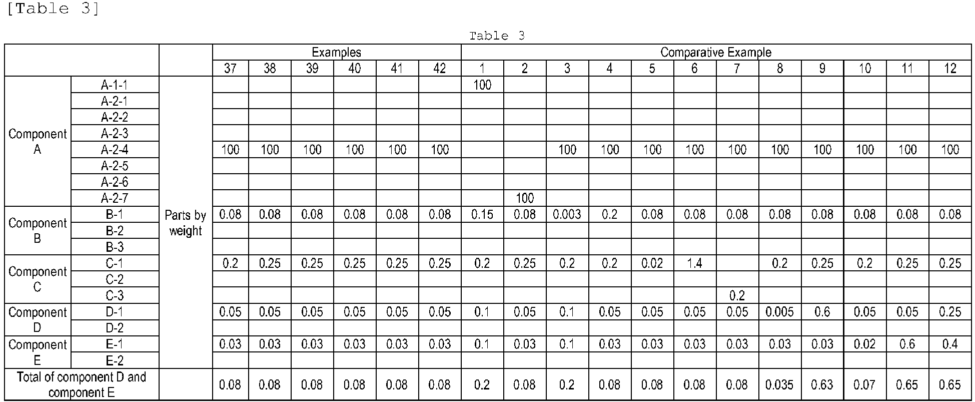

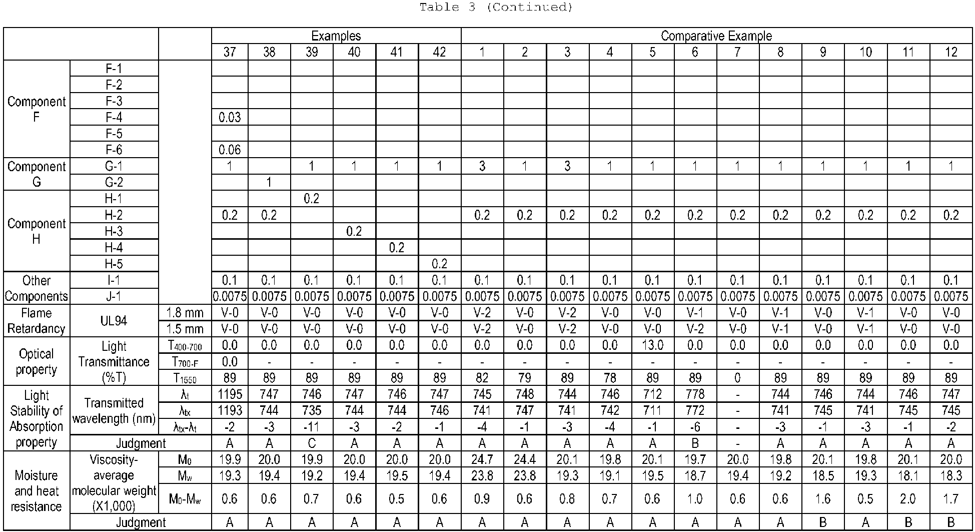

Results of Examples described in Tables 1 to 3 show that the resin composition are excellent in moisture and heat resistance and flame retardancy, form a molded article having a wavelength-selective absorption property, and are excellent in light stability of an absorption property, and therefore can be adapted to a member for an infrared sensor applied to the fields of autonomous driving technology and the like.

## Claims

1. A resin composition comprising
(A) 100 parts by weight of an aromatic polycarbonate resin (component A) containing an aromatic polycarbonate resin having a branched structure having a branching ratio of 0.2 to 1.5 mol%;
(B) 0.005 to 0.15 parts by weight of an organic alkali (alkaline earth) metal salt (component B);
(C) 0.03 to 1.2 parts by weight of a colorant (component C) having an absorption maximum at a wavelength of less than 680 nm;
(D) 0.01 to 0.5 parts by weight of a phenol-based thermal stabilizer (component D); and
(E) 0.025 to 0.5 parts by weight of a phosphorus-based thermal stabilizer (component E),
wherein a total amount of the component D and the component E is 0.6 parts by weight or less,
an average value of light transmittances at a wavelength of 400 to 700 nm in a thickness direction of a molded article having a thickness of 3 mm is 1.5% or less, and
the light transmittance at a wavelength of 1,550 nm is 80% or more.

2. The resin composition according to claim 1, wherein a content of the aromatic polycarbonate resin having a branched structure having a branching ratio of 0.2 to 1.5 mol% in the component A is 50 to 100 wt%.

3. The resin composition according to claim 1 or 2, comprising (F) 0.001 to 1.2 parts by weight of a colorant (component F) having an absorption maximum at a wavelength of 680 nm or more and less than 1,000 nm with respect to 100 parts by weight of the component A, wherein a total amount of the component C and the component F is 1.3 parts by weight or less.

4. The resin composition according to claim 3, wherein an average value of light transmittances at a wavelength of 700 nm to a wavelength at which absorption of the component F is maximum in a thickness direction of a molded article having a thickness of 3 mm is 1.5% or less.

5. The resin composition according to claim 3, wherein the component F is at least one colorant selected from the group consisting of an anthraquinone-based colorant, a phthalocyanine-based colorant, a perylene-based colorant, and a heterocyclic colorant.

6. The resin composition according to claim 1 or 2, comprising (G) a silicone compound having a Si-H group in a molecule (Component G) in an amount of 0.1 to 6 parts by weight with respect to 100 parts by weight of the component A.

7. The resin composition according to claim 1 or 2, comprising (H) a benzotriazole-based ultraviolet absorber and/or a triazine-based ultraviolet absorber (Component H) in an amount of 0.01 to 1 parts by weight with respect to 100 parts by weight of the component A.

8. A molded article formed from the resin composition according to claim 1 or 2.

9. The molded article according to claim 8, wherein the molded article is a cover material covering an infrared sensor.

10. The molded article according to claim 9, wherein the molded article is a cover material covering an infrared sensor used for a monitoring system for monitoring a passenger including a driver and an LiDAR for detecting a surrounding vehicle and a building.
